# EUROPEAN PATENT APPLICATION

(11) **EP 2 295 677 A1**
(43) Date of publication of application: **16.03.2011**
(21) Application number: 10172089.4
(22) Date of filing: 05.08.2010
(51) Int. Cl.: E04H 17/00, E01F 7/02, B29D 28/00

(54) **A net for delimiting work-site areas or the like and a method for realising the net**

(30) Priority: 18.08.2009 IT MI20091487
(71) Applicant: Tenax S.p.A., 23897 Viganò (Lecco) (IT)
(72) Inventor: Beretta, Cesare, 23871 Lomagna (LECCO) (IT); Maggioni, Pierluigi, 23891 Barzanò (LECCO) (IT)
(74) Representative: Ponzellini, Gianmarco

(57) **Abstract**

The invention relates to a net for delimiting working areas or the like comprising a laminar structure (2) of plastic material presenting a first dimension (L), particularly a prevailing dimension, and a second dimension (H) transversal to the first dimension, said laminar structure (2) presenting at least a plurality of lightening perforations (3) defining a plurality of substantially planar longitudinal bands (4) that extend along the first dimension (L) and a plurality of planar transversal bands (5) that extend along the second dimension (H). The first and second bands (4, 5) intersect at respective nodes (6) to form a plurality of meshes. The first dimension (L) exhibits mechanical tensile strength properties that are similar to mechanical tensile strength properties of the second dimension (H) and the laminar structure (2) exhibits a weight per square metre comprised between 20 g/m² and 100 g/m². The laminar structure thus obtained is advantageously realised with a double-stretching stage performed first along the first dimension (L) and then along the second dimension (H).

## Description

The invention relates to a net for delimiting work-site areas or the like.

The present invention further concerns a method for realising the above-mentioned net for delimiting work-site areas or the like.

The present invention is suitable for use in the building sector, and in particular is dedicated preferably to fencing off work-sites and/or similar building areas to be delimited for reasons of signalling the presence of temporary works.

As is known, the fencing-off of work-sites and/or similar areas is a compulsory measure as set out in various standards, among which CEE directive CEE 92/57 and Italian law decree no. 494 of 14.08.96. Initially the fencing-off of work-sites was done by use of structures destined to delimit and cover the working area from sight; these structures were however rather heavy and unwieldy and the relative setting-up operation was particularly laborious and complicated.

In addition, the materials used were easily subject to wear and tear, and required frequent replacing. With the aim of obviating the drawbacks, the materials were replaced by fencing made of sufficiently sturdy, stable and resistant (to atmospheric agents) plastic material.

In particular, the plastic nets, typically orange in colour and widely used on the market, exhibit a laminar structure which prevalently extends along a first dimension, corresponding to the length thereof, and a second dimension, corresponding to the width or height thereof.

The laminar structure exhibits a plurality of holes for lightening the structure, which delimit a plurality of longitudinally flattened bands and a plurality of transversal bands, also flattened. The longitudinal bands extend along the first dimension of the net, while the transversal bands extend along the second dimension thereof. The longitudinal bands and the transversal bands reciprocally intersect to form a plurality of similar meshes, the structure of which is also flattened.

Normally the above-cited nets are made by starting with the extrusion of the laminar structure which is left to cool in order then to be subjected to a subsequent stage of perforating.

Once perforated, the laminar structure is stretched, for example, along a dimension thereof, usually the longitudinal dimension.

In this way the mechanical properties thereof are improved along the corresponding dimension.

Though the existing nets for delimiting work-site areas or the like are very widespread, the Applicant has found that they are not lacking in some drawbacks, mainly in relation to the mechanical properties thereof along the second dimension, i.e. transversally to their longitudinal development; the overall weight of the nets; the weight/tensile strength ratio; the percentage of covering of the delimited area; overall costs; as well as the practicality and facility of movement and set-up thereof in the work-site.

In particular, the Applicant has found that the known-type one-dimension-stretched nets tend to tear transversally, mainly at the fastening points thereof to the fencing elements of the work-site, when they are subjected to high stress, for example stress due to atmospheric agents, such as wind, rain, hail and the like, or due to wrong handling thereof during the stages of installation or work in the work-sites, or even due to their own weight.

The transversal tears and breakages depend, among other things, on the non-homogeneity of the mechanical properties the nets exhibit along the respective dimensions thereof. In detail, it is clear that the lower tensile strength of the nets along the transversal dimension, due to the absence of a preceding stretching operation along the same dimension, is such that the laminar structure can give way following the action of significant external forces.

It should also be considered that the known nets exhibit a very large overall weight which influences negatively on the transport and the subsequent setting-up on the part of the operatives, apart from contributing to increasing the stresses and tensions to which the net is subjected during use thereof.

The main aim of the present invention is to provide a net for delimiting work-site areas or the like and a method for realising the net, which method is capable of obviating the problems encountered in the prior art.

An aim of the present invention is to provide a net which is able to resist external stresses equally in both the longitudinal and transversal dimension.

A further aim of the present invention is to obtain a net having a low weight which can enable easier management of the storing and transport operations, as well as easier mounting thereof.

A further aim of the present invention is to make available a net having a smaller visual covering of the delimited area (visibility from further away remaining the same) without losing the mechanical resistance characteristics.

These aims and others besides are substantially attained by a net for delimiting work-site areas or the like and by a method for realising the net, according to what is set out in the claims.

A description of a preferred embodiment now follows, provided by way of non-exclusive example, of a net for delimiting work-site areas or the like and a method for realising the net, in accordance with the accompanying figures of the drawings, in which:
figure 1 is a schematic view of a net, in accordance with a first embodiment of the present invention;
figure 2 is a schematic view of a net, in accordance with a second embodiment of the present invention;
figure 3 is a schematic view of a laminar structure of a net illustrated during a preliminary stage of a process for realising the net, in accordance with the present invention;
figure 4 is a schematic view of the laminar structure of figure 3, in a subsequent stage of the method; and figure 5 is a photograph of a portion of net realised using the method of the invention.

With reference to the figures, 1 denotes in its entirety a net for delimiting work-site areas or the like, in accordance with the present invention.

As can be seen in figures from 1 to 4, the net 1 comprises a laminar structure 2 realised in a plastic material in particular high-density HDPE polyethylene, or low linear-density LLDPE polyethylene. Preferably the net 1 is advantageously realised in a non-transparent material, and particularly in the colour orange, in order to give it excellent visibility even from great distances.

The laminar structure 2 exhibits a first dimension L, preferably prevalent, and a second transversal dimension H, preferably perpendicular to the first dimension L.

The laminar structure 2 further exhibits a plurality of holes 3 for lightening the structure, which define a plurality of longitudinal bands 4, substantially planar, which extend substantially along the first dimension L, and a plurality of transversal bands 5, also substantially planar, which develop substantially along the second dimension H. The first and the second bands 4, 5 intersect advantageously in respective nodes 6 to form a plurality of substantially flat meshes.

The thickness of each longitudinal band 4 and transversal band 5 is substantially constant and the same along the development thereof, with the exception of the zones corresponding to the nodes 6 in which the thickness slightly increases, imperceptibly with respect to the thickness of the bands 4, 5, for reasons that will be better explained herein below.

The laminar structure 2 advantageously exhibits a thickness which is not greater than 0.9 mm and in particular not greater than 0.75 mm.

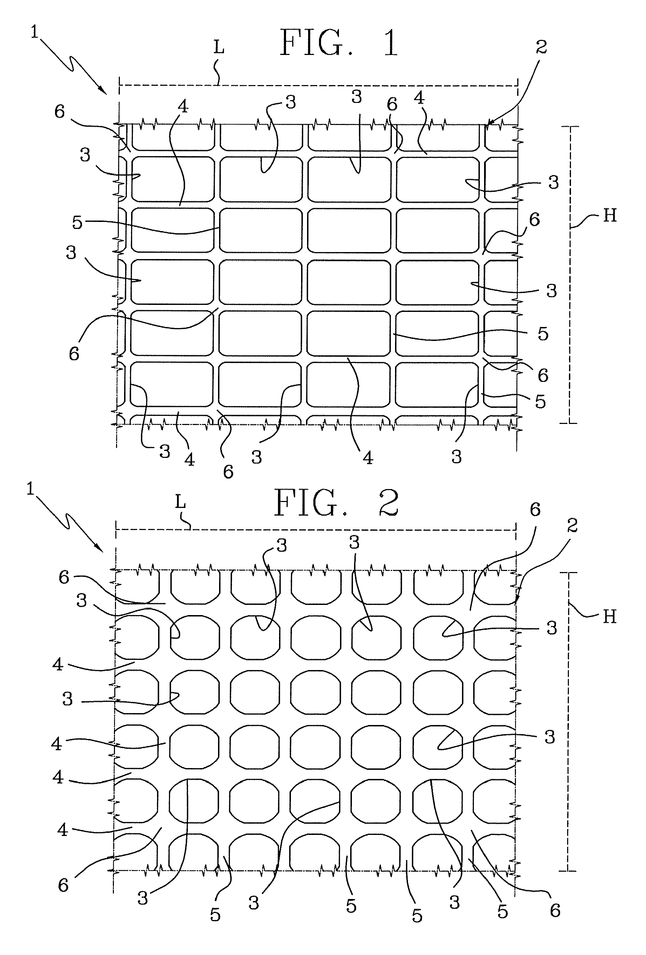

With particular reference to figures 1 and 2, the longitudinal bands 4 and/or the transversal bands 5 exhibit, in the lie plane, a respective transversal dimension Y to the development direction X which first decreases starting from a respective intersection node 6, for example up to about the halfway line of the band 4, 5, and then increases in size up to the subsequent intersection node 6.

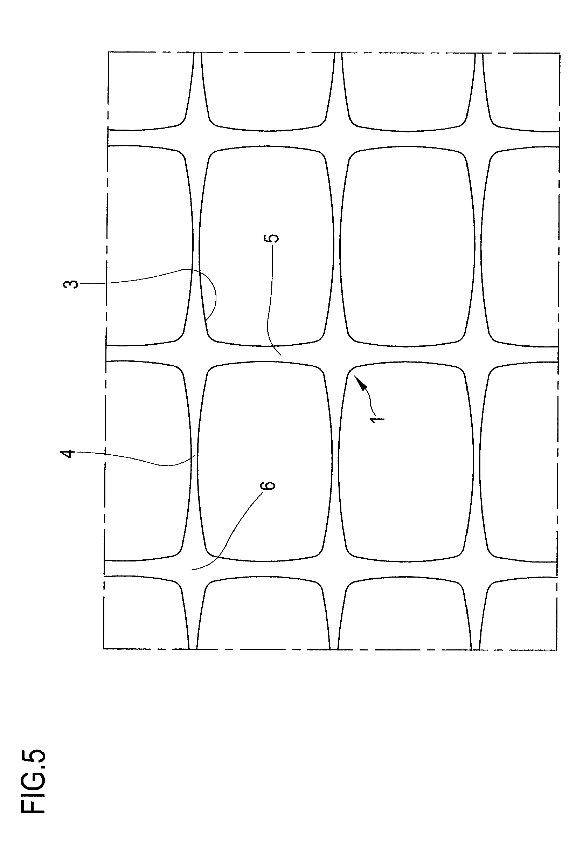

In this way the lightening holes 3 exhibit a polygonal shape in plan view, substantially rectangular with slightly convex sides, and with the corners slightly rounded (note the photograph of figure 5).

Still with reference to figures 1 and 2, the distribution of the holes 3 of the laminar structure 2 and the size thereof give the net 1 a covering capacity of the area or work-site delimited by the net which is comprised between 10% and 40% of a covering index, in particular between 15% and 25%, still more in particular between 17% and 18.35%, and still more preferably about 17.50%.

It is noteworthy that the analysis of visual covering was performed by acquiring an image of the net and processing it using zone-recognising software of areas in the images.

The testing method comprises a neon light having an opaque reflector enabling uniform distribution of the light, on which the net is rested such that it is back-lit.

The image is acquired using a digital television camera located at 1.5 metres height (distance) with respect to the net, with the lens perpendicular to the plane of the net.

Obviously the sampling program is set with constant parameters over the whole net to be examined.

Returning to the detailed description of the product, the first dimension L of the laminar structure 2 of each net 1 advantageously exhibits mechanical tensile strength properties that are substantially the same as the mechanical tensile strength properties of the second dimension H.

In the preferred embodiment of the present invention, the first dimension L and the second dimension H of the laminar structure 2 exhibit mechanical tensile strength properties having differences of less than 25% and in particular having differences of less than 20%.

In particular, the tensile strength of the laminar structure 2 along the first dimension L (in a first embodiment) is comprised between 3 kN/m and 7 kN/m and in detail between 4kN/m and 5kN/m, preferably about 4.2 kN/m +/-10%.

In a second embodiment the tensile strength of the laminar structure 2 along the first dimension L is comprised between 1 kN/m and 5 kN/m and in detail between 1,5 kN/m and 3 kN/m, preferably about 2 kN/m +/-10%.

Likewise, the tensile strength of the laminar structure 2 along the second dimension H is not less than 2kN/m and in detail not less than 3.5 kN/m, and still more in detail is about 4 kN/m +/- 10%.

The laminar structure 2 advantageously exhibits a weight per square metre comprised between 20g/m² and 100g/m²_{.}

In detail the laminar structure 2 exhibits a weight per square metre comprised between 20g/m² and 80g/m², preferably between 20g/m² and 60g/m², still more preferably between 20g/m² and 55 g/m².

The net 1 of the present invention is advantageously realised by a method comprising a stage of forming the laminar structure 2 in the above-mentioned plastic material.

The formation of the laminar structure 2 is preferably performed by extrusion. The extrusion of plastic material for forming the laminar structure 2 can be performed flat or in a tubular configuration. When the plastic material is extruded in the tubular configuration, the tubular product must be subsequently opened in order for it to take on the desired flat configuration.

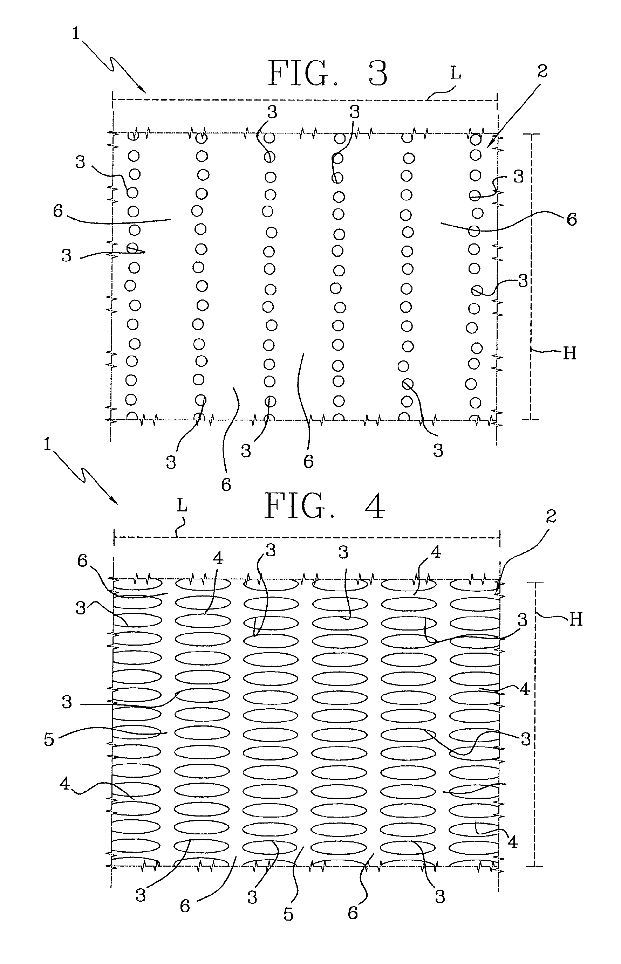

Following the formation of the laminar structure 2 a stage of perforating the structure 2 is performed, in which the product is substantially as illustrated in figure 3. In particular, via a stage of perforating the above-mentioned, lightening perforations 3 are realised, which consequently delimit the above-described longitudinal bands 4 and transversal bands 5 extending respectively along the first and the second dimensions L and H.

The perforating stage also enables a consequently delimiting of the nodes 6 corresponding to points of intersection between the longitudinal bands 4 and the transversal bands 5.

The perforating of the laminar structure 2 is preferably performed during the stage of forming the laminar structure 2, in particular when the plastic material is above the respective melting temperature. The perforating is preferably done during the extrusion of the plastic material, in particular when the plastic material undergoing extrusion is above the respective melting point thereof.

The perforating stage gives rise to a basic laminar structure 2 the lightening perforations 3 of which exhibit a substantially circular shape, slightly irregular and not always perfectly aligned (this is due to the fact that the perforating is done when the net is still above melting point).

Following the stage of perforating, a pre-stretching stage is performed on the laminar structure 2 at least along the first dimension L and a stage of radial calibration is also performed. Both the pre-stretching and the radial calibration are preferably performed in a stretching ratio comprised for example between 1:1.1 e 1:2.2.

The stages of pre-stretching and radial calibration are advantageously performed contemporaneously with a stage of cooling the extruded plastic material to a temperature of below the respective melting point such as to stabilise the laminar structure 2 and the shape of the lightening perforations 3 as illustrated in figure 3.

With the aim of improving the mechanical properties of the laminar structure 2 of the net 1, in particular the tensile strength thereof, the laminar structure 2 is advantageously stretched along the first dimension l and in a predetermined stretching ratio. The stretching of the laminar structure 2 along the first dimension L determines the natural lengthening of the structure 2 with a consequent deforming of the lightening perforations 3, which change their shape from a substantially circular profile (figure 3) to a substantially elongate profile, preferably oval (figure 4).

With the aim of forming an isotropic laminar structure 2 in relation to the mechanical properties thereof, and in particular in relation to the tensile strength of the structure 2, the laminar structure 2 is subsequently stretched along the second dimension H, according to a predetermined stretching ratio.

In this way, the laminar structure 2 deforms plastically along the second dimension H such that the lightening perforations 3 change their shape from a substantially oval profile (figure 4) to a substantially rounded polygonal profile (figures 1 and 2), according to the desired configuration.

The stretching of the laminar structure 2 along the first dimension L is advantageously performed to a stretching ratio comprised between 2 and 8, and in particular between 3 and 7, while the stage of stretching the laminar structure 2 along the second dimension H is performed to a stretching ratio comprised between 2 and 8 and in particular between 3 and 6.

The net 1 and the method for realising the net according to the present invention enable the drawbacks in the prior art to be obviated, and offer important advantages.

Primarily the nets obtained with the above-described method are lighter than traditional nets, while at the same time exhibiting substantially the same mechanical properties thereas. In other words the method of the present invention enables nets to be obtained which exhibit a weight per square metre which is about a third of the weight of a traditional net, while however exhibiting a similar tensile strength along at least the first dimension and a percentage index of delimited area-covering that is considerably smaller. Therefore, with the mechanical properties and the area covered being equal, the nets of the present invention as described and claimed are significantly lighter than traditional-type nets.

In addition, a point worth considering is that the above-mentioned nets can be used in external environments, as they can withstand the greatest diversity of meteorological and/or climatic conditions, such as for example wind, rain, hail, snow; they effectively resist the action of the foregoing without tearing and/or undesired breakage. With particular reference to wind, the net of the present invention is able to resist the most violent wind conditions as the considerable dimensions of the perforations (or correspondingly the smaller covered area) due to the double-stretching of the laminar structure renders the nets particularly suitable for withstanding aerodynamic stress, preventing the typical and undesired "sail-like" billowing effect normally due to the large surfaces of the traditional nets.

It is further noteworthy that the large size of the lightening perforations give the net a low percentage of coverage of the delimited area, while guaranteeing, as has been clarified, the necessary characteristics of resistance.

It is also worth stressing that the isotropy of the above-mentioned nets enables use thereof in any dimension as the tensile strength is almost identical both along the first dimension and along the second dimension.

A further and final point is that the considerable reduction in weight of the above-described nets corresponds to a smaller quantity of material used per square metre, which corresponds in turn to a smaller cost per square metre thereof, making the product also particularly advantageous from the point of view of costs.

Further, the considerable reduction in weight also translates into a greater transportability of the nets as well as a greater simplicity and practicality of handling thereof, including setting-up thereof and packing-up thereof by the operatives when taking down the work-site.

## Claims

1. Net for delimiting working areas or the like comprising a laminar structure (2) of plastic material exhibiting a first dimension (L), particularly a prevailing dimension, and a second dimension (H) transversal to said first dimension, said laminar structure (2) exhibiting at least a plurality of lightening perforations (3) defining a plurality of longitudinal bands (4), substantially planar, substantially extending along said first dimension (L) and a plurality of transversal bands (5), substantially planar, substantially extending along said second dimension (H) and intersecting said longitudinal bands (4) in respective nodes (6) to form a plurality of meshes, substantially flat, said perforations (3) being made in the laminar structure (2) when the structure is above the melting point temperature, the meshes obtained being therefore at least partially irregular, said laminar structure (2) presenting a weight per square metre included between 20 g/m² and 100 g/m².

2. Net according to claim 1, wherein said first dimension (L) of said laminar structure presents mechanical tensile strength properties that are substantially similar to mechanical tensile strength properties of said second dimension (H), said first dimension (L) and said second dimension (H) of said laminar structure (2) exhibiting mechanical tensile strength properties having value differences that are lower than 25% and in particular having value differences lower than 20%.

3. Net according to claims 1 or 2, wherein the longitudinal and/or transversal bands exhibit in the respective planes a respective dimension, transversal to their longitudinal development, firstly decreasing starting from an intersection node (6), for example as far as about one half of the band, then dimensionally increasing as far as a next intersection node (6), the lightening perforations (3) in particular exhibiting a polygonal shape, with slightly rounded sides.

4. Net according to one or more of the preceding claims, wherein said laminar structure (2) exhibits a weight per square metre included between 20 g/m² and 80 g/m², preferably between 20 g/m² and 60 g/m², and even more preferably between 20 g/m² and 55 g/m².

5. Net according to one or more of the preceding claims, wherein said laminar structure (2) exhibits a thickness not higher than 0.9 mm and in particular not higher than 0.75 mm, even more in detail the net (1) being made of non-transparent material, for example being of orange colour, such as to be visible from a good distance.

6. Net according to one or more of the preceding claims, wherein the tensile strength resistance of said laminar structure (2) along said first dimension (L) is comprised between 1 kN/m and 5 kN/m and in detail between 1,5 kN/m and 3 kN/m, preferably is about 2 kN/m +/-10%.

7. Net according to one or more of the preceding claims, wherein the tensile strength resistance of said laminar structure (2) along said second dimension (H) is not lower than 2 kN/m and in detail is not lower than 3,5 kN/m and even more in detail is about 4 kN/m +/- 10%.

8. Net according to one or more of the preceding claims, wherein a distribution of the perforations (3) in said laminar structure (2) and the dimensions of the perforations give said net (1) a covering capacity of the area or of the enclosed working area corresponding to a covering index comprised between 10% and 40%, in particular between 15% and 25%, even more in detail between 17% and 18.35%, even more preferably equal about to 17.50%.

9. Net according to one or more of the preceding claims, wherein the weight per square metre of said laminar structure (2) is obtained by stretching said laminar structure (2) along said first dimension (L) according to a predetermined stretching ratio and by stretching said laminar structure (2) along said second dimension (H) according to a predetermined stretching ratio.

10. Method for manufacturing a net for delimiting working areas or the like, said method comprising the steps of:
creating at least a laminar structure (2) of plastic material, in particular polyethylene, said laminar structure (2) being even more in particular made by extrusion;
perforating said laminar structure (2) in order to delimit a plurality of longitudinal bands (4) extending along a first preferential dimension (L) of said laminar structure (2) and a plurality of transversal bands (5) extending along a second dimension (H) of said laminar structure (2), transversal to said first dimension (L), said first and second bands (4, 5) reciprocally crossing at respective nodes (6) to define a plurality of meshes;
stretching said laminar structure (2) along said first dimension (L) according to a predetermined stretching ratio;
stretching said laminar structure (2) along said second dimension (H) according to a predetermined stretching ratio.

11. Method according to claim 10, wherein the stretching steps along said first dimension (L) and along said second dimension (H) bring by reducing the weight per square metre of the laminar structure (2) in a range of values between 20 g/m² and 80 g/m², in particular between 20 g/m² and 60 g/m², and even more in particular between 20 g/m² and 55 g/m².

12. Method according to claim 10, wherein the punching of said laminar structure (2) is made during the manufacturing phase of said laminar structure (2) in particular when the plastic material is above the respective melting temperature, even more in particular during extrusion of the plastic material, and even more in detail when the extruded plastic material is above a melting point temperature thereof.

13. Method according to claim 12, further comprising a pre-stretching step of said laminar structure (2) at least along said first dimension and a step of radial calibration of the laminar structure (2) after the punching step, said pre-stretching and calibration steps being made according to a stretching ratio for example comprised between 1:1,1 and 1:2,2, in particular said pre-stretching and radial calibration steps being made simultaneously with a cooling step of the extruded plastic material to a temperature of below the respective melting temperature.

14. Method according to one or more of claims 12 to 13, wherein the stretching step of said laminar structure (2) along the first dimension (L) is made according to a stretching ratio comprised between 2 and 8 and in particular between 3 and 7, the stretching step of said laminar structure (2) along the second dimension (H) being made according to a stretching ratio comprised between 2 and 8 and in particular between 3 and 6.

15. Method according to one or more of claims 10 to 14, wherein the step of creating at least a laminar structure (2) of plastic material is a step of creating at least a laminar structure (2) of plastic material having a thickness not higher than 0.9 mm and in particular not higher than 0.75 mm.
